# EUROPÄISCHE PATENTSCHRIFT

(11) **EP 1 635 434 B1**
(45) Veröffentlichungstag und Bekanntmachung des Hinweises auf die Patenterteilung: **13.06.2012**
(21) Anmeldenummer: 05012009.6
(22) Anmeldetag: 03.06.2005
(51) Int. Cl.: H02G 3/08, H02G 3/14

(54) **Elektrische/elektronische Installationseinheit**
Electrical/electronical installation unit
Unité d'installation électrique/électronique

(30) Priorität: 09.09.2004 DE 102004043651
(43) Veröffentlichungstag der Anmeldung: 15.03.2006
(73) Patentinhaber: Albrecht Jung GmbH & Co. KG, 58579 Schalksmühle (DE)
(72) Erfinder: Gebhardt, Marc, 58579 Schalksmühle (DE); Kandt, Richard, 44803 Bochum (DE); Ullrich, Konrad, 58339 Breckerfeld (DE)

(56) Entgegenhaltungen:
- EP-A- 0 833 420
- DE-A1- 19 816 728
- DE-U1- 20 007 507
- US-A- 5 913 439

## Beschreibung

Die vorliegende Erfindung geht von einer gemäß Oberbegriff des Hauptanspruches konzipierten elektrischen/elektronischen Installationseinheit aus.

Derartige elektrische/elektronische Installationseinheiten sind in der Regel dafür vorgesehen, eine Vielzahl von in Gebäuden installierten Aktoren (Jalousieantriebe, Beleuchtungseinrichtungen, Fühler, Wächter usw.) bedarfsgerecht zu beeinflussen. Zu diesem Zweck sind die unterschiedlichsten Installationseinrichtungen, wie Schalter, Taster, Dimmer usw. bekannt geworden.

Durch die DE 40 00 623 A1 ist eine dem Oberbegriff des Hauptanspruches entsprechende elektrische/elektronische Installationseinheit für die Gebäudesystemtechnik bekannt geworden. Bei dieser elektrischen/elektronischen Installationseinheit für die Gebäudesystemtechnik ist ein in einer Installationsdose unterzubringendes erstes Funktionsmodul und ein in einem Gehäuse untergebrachtes, unter Zwischenschaltung eines Abdeckrahmens auf der Wand anzuordnendes zweites Funktionsmodul vorgesehen. Das zweite Funktionsmodul ist dabei jedoch derart ausgebildet und angeordnet, dass zu seiner formschönen Ergänzung ein relativ dick ausgebildeter Abdeckrahmen notwendig ist. Außerdem ist der an der Installationsdose festzulegende Tragring nur für die Kombination mit einem einzigen Abdeckrahmentyp geeignet.

Ausgehend von einer derart ausgebildeten elektrischen/elektronischen Installationseinheit liegt der vorliegenden Erfindung die Aufgabe zugrunde, eine Installationseinheit zu schaffen, bei der einerseits die Verwendung besonders dünn ausgebildeter Abdeckrahmen auf einfache Art und Weise möglich ist und bei der andererseits bei Verwendung ein und desselben Tragringes auch eine Kombination mit unterschiedlich dick ausgeführten Abdeckrahmen verschiedener Abdeckrahmentypen auf einfache Art und Weise möglich ist.

Erfindungsgemäß wird diese Aufgabe durch die im Hauptanspruch angegebenen Merkmale gelöst.

Bei einer solchen Ausbildung ist besonders vorteilhaft, dass auf einfache Art und Weise eine positionsgenau Installation von Abdeckrahmen und zweitem Funktionsmodul auf besonders einfache Art und Weise für verschiedene Abdeckrahmentypen bei Verwendung ein und desselben Tragringes gewährleistet ist. Herstellaufwand, Lager- und Logistikkosten sind somit erheblich minimiert.

Weitere vorteilhafte Ausgestaltungen des erfindungsgemäßen Gegenstandes sind in den Unteransprüchen angegeben. Anhand eines Ausführungsbeispiels sei die Erfindung im Prinzip näher erläutert. Dabei zeigen:
- Fig. 1:: prinziphaft eine Explosionsdarstellung einer solchen elektrischen/elektronischen Installationseinheit mit dünn ausgeführtem Abdeckrahmen;
- Fig. 2:: prinziphaft einen Zusammenbau einer elektrischen/elektronischen Installationseinheit, entsprechend Fig. 1;
- Fig. 3:: das Detail Z entsprechend Fig. 2 in vergrößerter Darstellung, wobei vom zweiten Funktionsmodul lediglich das Gehäuse mit Leiterplatte abgebildet ist;
- Fig. 4:: den Tragring in vergrößerter Darstellung;
- Fig. 5:: eine Detailansicht der elektrischen/elektronischen Installationseinheit mit einem dick ausgeführten Abdeckrahmen.

Wie aus den Figuren hervorgeht, besteht eine solche elektrische/elektronische Installationseinheit für die Gebäudesystemtechnik im Wesentlichen aus einem in einer Installationsdose 1 unterzubringenden ersten Funktionsmodul 2 und einem in einem Gehäuse 3 untergebrachten, unter Zwischenschaltung eines Abdeckrahmens 4 auf der Wand anzuordnenden zweiten Funktionsmodul 5.

Wie des Weiteren aus den Figuren hervorgeht, sind in das aus Kunststoff bestehende Gehäuse 3 des zweiten Funktionsmoduls 5 acht taschenartigen Ausnehmungen 6 eingeformt, in die entsprechend nasenförmig ausgebildete, an die Innenseite 7 des ebenfalls aus Kunststoff hergestellten Abdeckrahmens 4 angeformte, nasenförmige Halteelemente 8 formschlüssig eingreifen. Die acht im Gehäuse 3 vorhandenen taschenartigen Ausnehmungen 6 weisen jeweils eine wesentlich größere Tiefe auf, als die acht an den Abdeckrahmen 4 angeformten Halteelemente 8 dick sind. Die Anordnung und Ausbildung der taschenartigen Ausnehmungen 6 in Abstimmung auf die Halteelemente 8 ist dabei so gewählt, dass das Gehäuse 3 des zweiten Funktionsmoduls 5 in Bezug auf die Oberseite des Abdeckrahmens 4 tiefer gesetzt von diesem aufgenommen ist.

Zur sicheren und komfortablen Installation der Installationseinheit ist an der Installationsdose 1 ein aus Metall hergestellter Tragring 9 festlegbar, der an zwei gegenüberliegenden Bereichen angeformte in seine Durchtrittsöffnung 13 hineinragende Befestigungsmittel 10 aufweist. Die beiden Befestigungsmittel 10 sind dabei im Wesentlichen schienenartig ausgebildet. An das Gehäuse 3 des zweiten Funktionsmoduls 5 ist an zwei gegenüberliegenden Seiten jeweils entsprechend ein aus Metall hergestelltes Befestigungselement 11 angebracht. Die mit den Befestigungsmitteln 10 des Tragrings 9 korrespondierenden Befestigungselemente 11 sind dabei jeweils in Form einer federnden Doppelzunge ausgeführt. Bezüglich ihrer Anordnung und Ausbildung sind die Befestigungsmittel 10 und die Befestigungselemente 11 derart aufeinander abgestimmt, dass ein lang erstreckter Kooperationsbereich B realisiert ist, der eine sichere kraftschlüssige Verbindung entstehen lässt. Durch diesen lang erstreckten Kooperationsbereich B ist auf einfache Art und Weise bei sicherer Installation ein wirkungsvoller Putz- bzw. Tapetenausgleich realisiert.

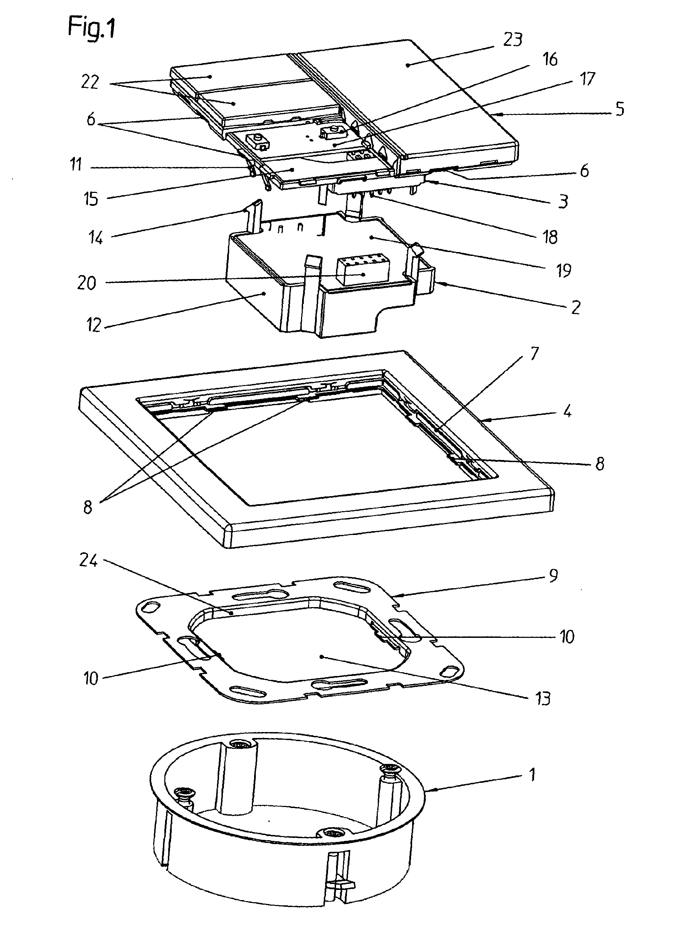

Wie insbesondere aus Figur 1 hervorgeht, ist das in die Installationsdose 1 hineinragende erste Funktionsmodul 2 mit einem, am Gehäuse 3 des zweiten Funktionsmoduls 5 festlegbaren separaten Gehäuseteil 12 umgeben. Zur Befestigung rasten an das separate Gehäuseteil 12 angeformte Rasthaken 14 in entsprechend ausgebildete, am Gehäuse 3 vorhandene Rastausnehmungen ein. Das Gehäuse 3 des zweiten Funktionsmoduls 5 hat einen flanschartig am Abdeckrahmen 4 zur Anlage kommenden ersten Gehäusebereich 15, der zur Aufnahme einer mit den notwendigen Schaltelementen 16 und sonstigen elektronischen Bauteilen bestückten ersten Leiterplatte 17 versehen ist. Die erste doppelseitig bestückte Leiterplatte 17 weist nach unten abragende Steckkontaktteile 18 auf, die zur elektrischen Verbindung des zweiten Funktionsmoduls 5 mit dem ersten Funktionsmodul 2 vorgesehen sind. Zu diesem Zweck weist das erste Funktionsmodul 2 eine zweite Leiterplatte 19 auf, welche außer mit den zur Funktion notwendigen Bauteilen mit einem entsprechend ausgeführten Steckerteil 20 bestückt ist. Zur Anbindung des separaten Gehäuseteils 12 ist das Gehäuse 3 mit einem als Ansatz ausgebildeten zweiten Gehäusebereich 21 versehen. Der zweite Gehäusebereich 21 ist außerdem zur Teilaufnahme von Funktionselementen des ersten Funktionsmoduls 2 vorgesehen.

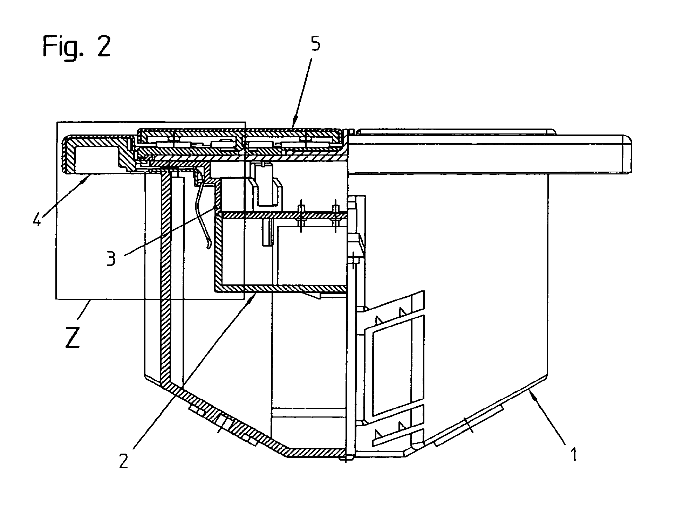

Wie des Weiteren insbesondere aus Figur 1 und Figur 2 hervorgeht, weist das zweite Funktionsmodul 5 als Abschluss mehrere Bedientasten 22 und eine Anzeigeeinheit 23 auf.

Wie insbesondere aus Figur 1, Figur 4 und Figur 5 hervorgeht, weist der an der Installationsdose 1 festlegbare Tragring 9 einen abstehenden umlaufend der Durchtrittsöffnung 13 zugeordneten Kragen 24 auf. An den freien Endbereich des Kragens 24 sind gegenüberliegend angeordnet zwei in die Durchtrittsöffnung 13 hineinragende Befestigungsmittel 10 angeformt. Die Befestigungsmittel 10 sind dafür vorgesehen, um kraftschlüssig mit den beiden am Gehäuse 3 des zweiten Funktionsmoduls 5 angebrachten Befestigungselementen 11 in Verbindung zu kommen.

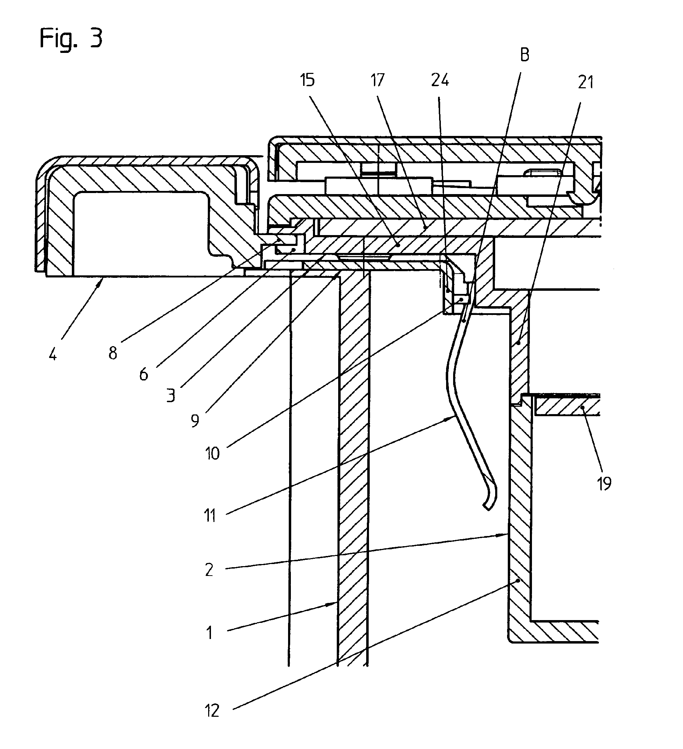

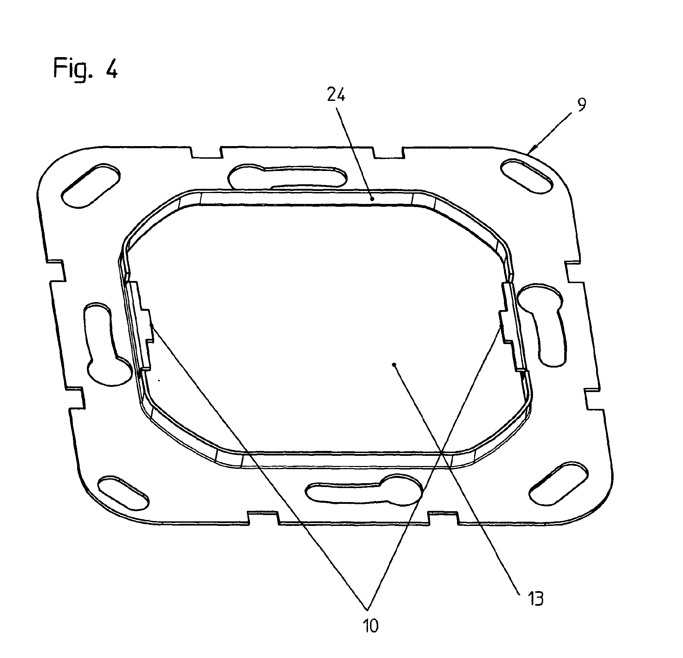

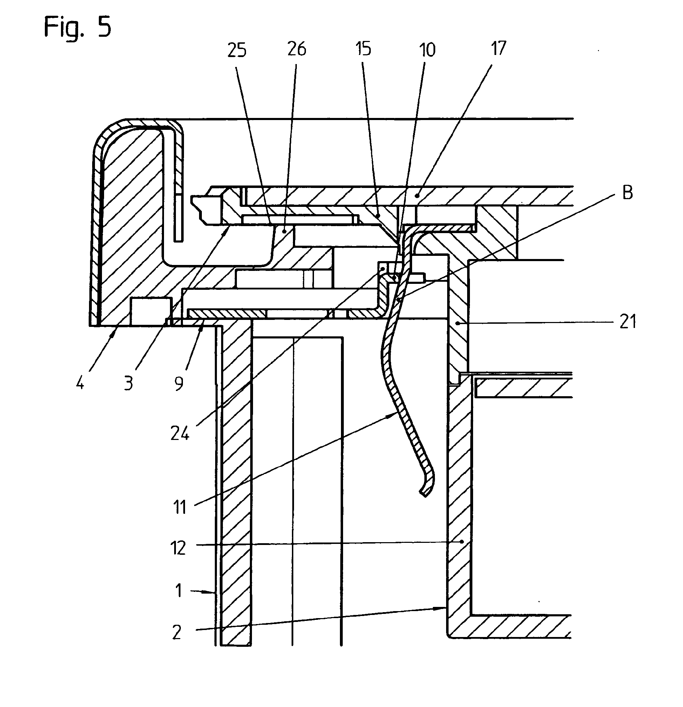

Wie insbesondere aus Figur 3, Figur 4 und Figur 5 hervorgeht, ist der Tragring 9 zur Kombination sowohl mit einem dünn ausgebildeten Abdeckrahmen 4 (Fig. 3) als auch mit einem dick ausgebildeten Abdeckrahmen 4 (Fig. 4) vorgesehen. Zu diesem Zweck wird der Tragring 9, wie insbesondere aus den Figuren 1 bis 4 hervorgeht, einerseits mit seinem die Durchtrittsöffnung 13 umgebenden Kragen 24 in die Installationsdose 1 hineinragend an dieser festgelegt. Wie insbesondere aus Figur 5 hervorgeht, wird der Tragring 9 andererseits zu diesem Zweck mit seinem die Durchtrittsöffnung 13 umgebenden Kragen 24 von der Installationsdose 1 nach außen abkragend an dieser festgelegt. Somit ist gewährleistet, dass bei Verwendung ein und desselben Tragringes 9 eine sichere Installation der elektrischen/elektronischen Installationseinheit bei Verwendung von unterschiedlich dick ausgeführten Abdeckrahmen möglich ist.

Weil die Befestigungselemente 10 an den freien Endbereich des Kragens 24 angeformt sind und der Tragring 9 einmal in die Installationsdose 1 mit seinem Kragen 24 hineinragend und ein anders mal mit seinem Kragen 24 von der Installationsdose 1 nach außen abkragend an dieser festgelegt werden kann, ergibt sich in Bezug auf die Wandebene auch bei unterschiedlich hoch angeordneten zweiten Funktionsmodulen 5 immer eine optimale, kraftschlüssige Kooperation der Befestigungsmittel 10 mit den Befestigungselementen 11. Dabei ist besonders vorteilhaft, dass die Befestigungselemente 11 mit einem sich lang erstreckenden Kooperationsbereich B ausgestattet sind, so dass sich über den großen Einführbereich des zweiten Funktionsmoduls 5 eine optimale, kraftschlüssige Verbindung zwischen den Befestigungsmitteln 10 und den Befestigungselementen 11 zur Herstellung einer sicheren Installation einstellt.

Wie insbesondere bei einem Vergleich von Figur 3 und Figur 5 deutlich wird, ergibt sich in Bezug auf die Wandebene ein deutlicher Höhenunterschied des zweiten Funktionsmoduls 5 bei Verwendung von verschiedenen Abdeckrahmen 4 (dünn/dick).

Der Figur 3 ist deutlich zu entnehmen, dass das zweite Funktionsmodul 5 mit seinem Gehäuse 3 so weit wie möglich an die Wandebene herangerückt ist. Dies ist der Fall, weil die Auflage des Gehäuses 3 über die eingeformten taschenartigen Ausnehmungen 6 erfolgt, die an an den Abdeckrahmen 4 angeformte nasenförmige Halteelemente 8 zur Anlage kommen. Somit dringt die gesamte elektrische/elektronische Installationseinheit entsprechend tiefer in die Installationsdose 1 ein.

Der Figur 5 ist deutlich zu entnehmen, dass das zweite Funktionsmodul 5 mit seinem Gehäuse 3 weiter von der Wandebene entfernt angeordnet ist. Dies ist der Fall, weil das Gehäuse 3 mit seiner Bodenfläche 25 auf einem erhöhtem Auflagesockel 26 des Abdeckrahmens 4 zur Anlage kommt.

Vorteilhafterweise können bei Verwendung von ein und demselben Tragring 9 diese Höhenunterschiede einfach dadurch ausgeglichen werden, indem eine verdrehte Befestigung des Tragringes 9 an der Installationsdose 1, wie vorstehend bereits beschrieben, erfolgt. Für die Installationssicherheit der elektrischen/elektronischen Installationseinheit in beiden Fällen entsteht dabei kein Nachteil, weil die kraftschlüssige Verbindung zwischen den Befestigungsmitteln 10 und den Befestigungselementen 11 in beiden Fällen auf gleich hohem Niveau gewährleistet ist.

## Patentansprüche

1. Elektrische/elektronische Installationseinheit für die Gebäudesystemtechnik mit einem in einer Installationsdose unterzubringenden ersten Funktionsmodul und einem in einem Gehäuse untergebrachten, unter Zwischenschaltung eines Abdeckrahmens auf der Wand anzuordnenden zweiten Funktionsmodul **dadurch gekennzeichnet, dass** an der Installationsdose (1) ein Tragring (9) festlegbar ist, der einen abstehenden, umlaufend der Durchtrittsöffnung (13) zugeordneten Kragen (24) aufweist, der an seiner Innenwandung zumindest ein in die Durchtrittsöffnung (13) hineinragende schienenartiges Befestigungsmittel (10) aufweist, welches zur kraftschlüssigen Kooperation mit zumindest einem am Gehäuse (3) des zweiten Funktionsmoduls (5) angebrachten Befestigungsfederelement (11) in Verbindung kommt.

2. Elektrische/elektronische Installationseinheit nach Anspruch 1, **dadurch gekennzeichnet, dass** der Tragring (9) mit seinem der Durchtrittsöffnung (13) zugeordneten Kragen (24) in die Installationsdose (1) hineinragend an dieser festgelegt ist.

3. Elektrische/elektronische Installationseinheit nach Anspruch 1, **dadurch gekennzeichnet, dass** der Tragring (9) mit seinem der Durchtrittsöffnung (13) zugeordneten Kragen (24) von der Installationsdose (1) nach außen abragend an dieser festgelegt ist.

4. Elektrische/elektronische Installationseinheit nach einem der Ansprüche 1 bis 3, **dadurch gekennzeichnet, dass** zumindest ein Befestigungsmittel (10) an den freien Endbereich des Kragens (24) angeformt ist.

5. Elektrische/elektronische Installationseinheit nach einem der Ansprüche 1 bis 4, **dadurch gekennzeichnet, dass** zwei gegenüberliegend angeordnete Befestigungsmittel (10) vorgesehen sind.

6. Elektrische/elektronische Installationseinheit nach einem der Ansprüche 1 bis 5, **dadurch gekennzeichnet, dass** die Seitenwandungen des Gehäuses (3) des zweiten Funktionsmoduls (5) Anschlussbereiche aufweisen, und dass der Abdeckrahmen (4) mit Anschlusszonen versehen ist, an denen die Anschlussbereiche des Gehäuses (3) zur Anlage kommen.

7. Elektrische/elektronische Installationseinheit nach einem der Ansprüche 1 bis 6, **dadurch gekennzeichnet, dass** zumindest ein an den Seitenwandungen des Gehäuses (3) des zweiten Funktionsmoduls (5) vorhandener Anschlussbereich als taschenartige Ausnehmungen (6), und dass zumindest eine am Abdeckrahmen (4) vorhandene Anschlusszone als formschlüssig in die taschenartige Ausnehmung (6) eingreifendes Halteelement (8) ausgebildet ist.

8. Elektrische/elektronische Installationseinheit nach Anspruch 7, **dadurch gekennzeichnet, dass** die Tiefe der im Gehäuse (3) vorhandenen taschenartigen Ausnehmungen (6) zumindest der Dicke der am Abdeckrahmen (4) vorhandenen Halteelemente (8) entspricht.

9. Elektrische/elektronische Installationseinheit nach einem der Ansprüche 1 bis 8, **dadurch gekennzeichnet, dass** das Gehäuse (3) des zweiten Funktionsmoduls (5) einen flanschartig am Abdeckrahmen (4) zur Anlage kommenden ersten Gehäusebereich (15) zur Aufnahme einer mit Schaltelementen (16) und sonstigen Bauteilen bestückten Leiterplatte (17) und einen in die Installationsdose (1) hineinragenden, zur Teilaufnahme des ersten Funktionsmoduls (2) vorgesehenen zweiten Gehäusebereich (21) aufweist.

10. Elektrische/elektronische Installationseinheit nach einem der Ansprüche 1 bis 9, **dadurch gekennzeichnet, dass** das in die Installationsdose (1) hineinragende erste Funktionsmodul (2) mit einem, am Gehäuse (3) des zweiten Funktionsmoduls (5) festlegbaren separaten Gehäuseteil (12) umgeben ist.

11. Elektrische/elektronische Installationseinheit nach einem der Ansprüche 1 bis 10, **dadurch gekennzeichnet, dass** das erste Funktionsmodul (2) integral vom zweiten Funktionsmodul (5) umfasst ist.

## Claims

1. Electrical/electronic installation unit for use in building system engineering having a first functional module to be accommodated in an installation box and a second functional module which is accommodated in a housing and is to be arranged on the wall with the interposition of a cover frame, **characterised in that** a supporting ring (9) can be located on the installation box (1) that has a protruding collar (24) that is assigned to the opening (13) in an encircling manner and on its inner wall has at least one rail-like fastening facility (10) that projects into the opening (13), connecting with at least one fastening spring element (11) that is attached to the housing (3) of the second functional module (5) for the purpose of force-fit cooperation.

2. Electrical/electronic installation unit according to Claim 1, **characterised in that** the supporting ring (9) is located on the installation box (1) with its collar (24) assigned to the opening (13) protruding into the same.

3. Electrical/electronic installation unit according to Claim 1, **characterised in that** the supporting ring (9) is located on the installation box (1) with its collar (24) assigned to the opening (13) projecting out of the same.

4. Electrical/electronic installation unit according to any of Claims 1 to 3, **characterised in that** at least one fastening facility (10) is integrally moulded onto the free end zone of the collar (24).

5. Electrical/electronic installation unit according to any of Claims 1 to 4, **characterised in that** two fastening facilities (10) are provided that are arranged opposite to each other.

6. Electrical/electronic installation unit according to any of Claims 1 to 5, **characterised in that** the side walls of the housing (3) of the second functional module (5) have connecting areas, and that the cover frame (4) is provided with connecting zones to which the connecting areas of the housing (3) come to rest.

7. Electrical/electronic installation unit according to any of Claims 1 to 6, **characterised in that** at least one connecting area provided on the side walls of the housing (3) of the second functional module (5) is designed as pouch-like recesses (6) and that at least one connecting zone provided on the cover frame (4) is designed as a retention element (8) engaging in the pouch-like recess (6) in a form-fit manner.

8. Electrical/electronic installation unit according to Claim 7, **characterised in that** the depth of the pouch-like recesses (6) provided in the housing (3) corresponds at least to the thickness of the retention elements (8) provided on the cover frame (4).

9. Electrical/electronic installation unit according to any of Claims 1 to 8, **characterised in that** the housing (3) of the second functional module (5) has a first housing section (15) that comes to rest in a flange-like fashion on the cover frame (4) so as to accommodate a printed circuit board (17) equipped with switching elements (16) and other components, and a second housing section (21) that projects into the installation box (1) provided for the purpose of partially accommodating the first functional module (2).

10. Electrical/electronic installation unit according to any of Claims 1 to 9, **characterised in that** the first functional module (2) projecting into the installation box (1) is encircled by a separate housing element (12) that can be located on the housing (3) of the second functional module (5).

11. Electrical/electronic installation unit according to any of Claims 1 to 10, **characterised in that** the first functional module (2) is integrally enclosed by the second functional module (5).

## Revendications

1. Unité d'installation électrique / électronique pour un système immotique, comprenant un premier module fonctionnel à loger dans une boîte de raccordement à encadrer et un deuxième module fonctionnel logé dans un boîtier et à disposer sur la paroi par intercalage d'un cadre de recouvrement, **caractérisée en ce qu'**un anneau porteur (9) est définissable sur la boîte de raccordement à encastrer (1) et qui présente un collier (4) fixé en saillie, associé de manière périphérique à l'ouverture de passage (13), lequel présente, à sa paroi intérieure, au moins un élément de fixation (10) du type rail saillant dans l'ouverture de passage (13) et qui est relié à au moins un élément de fixation à ressorts (11) fixé sur le boîtier (3) du deuxième module fonctionnel (5) en vue d'une coopération par adhérence.

2. Unité d'installation électrique / électronique selon la revendication 1, **caractérisée en ce que** l'anneau porteur (9) est défini avec son collier (24) associé à l'ouverture de passage (13) en saillie vers la boîte de raccordement à encastrer (1).

3. Unité d'installation électrique / électronique selon la revendication, **caractérisée en ce que** l'anneau porteur (9) est défini, avec son collier (24) associé à l'ouverture de passage (13) de manière saillante vers l'extérieur vers la boîte de raccordement à encastrer (1).

4. Unité d'installation électrique / électronique selon l'une quelconque des revendications 1 à 3, **caractérisée en ce qu'**au moins un moyen de fixation (10) vient en une pièce sur les zones d'extrémités du collier (24).

5. Unité d'installation électrique / électronique selon l'une quelconque des revendications 1 à 4, **caractérisée en ce que** sont prévus deux moyens de fixation (10) disposés en regard l'un par rapport à l'autre.

6. Unité d'installation électrique / électronique selon l'une quelconque des revendications 1 à 5, **caractérisée en ce que** les parois latérales du boîtier (3) du deuxième module fonctionnel (5) présentent des zones de raccordement et que le cadre de recouvrement (4) est muni de zones de raccordement où les zones de raccordement du boîtier (3) sont adjacentes.

7. Unité d'installation électrique / électronique selon l'une quelconque des revendications 1 à 6, **caractérisée en ce qu'**une zone de raccordement présente sur les parois latérales du boîtier (3) du deuxième module fonctionnel (5) est constituée en tant qu'évidements (6) sous forme de poches et qu'au moins une zone de raccordement présente sur le cadre de recouvrement (4) est constituée en tant qu'élément de maintien (8) s'engrenant à engagement positif dans l'évidement (6) sous forme de poche.

8. Unité d'installation électrique / électronique selon la revendication 7, **caractérisée en ce que** la profondeur des évidements (6) sous forme de poches présentes dans le boîtier (3) correspond au moins à l'épaisseur des éléments de maintien (8) présents sur le cadre du recouvrement (4).

9. Unité d'installation électrique / électronique selon l'une quelconque des revendications 1 à 8, **caractérisé en ce que** le boîtier (3) du deuxième module fonctionnel (5) présente une première zone de boîtier (15) adjacente sur le cadre de recouvrement (4) à la manière d'une bride en vue de loger un circuit imprimé (17) muni d'éléments de circuit (16) et d'autres éléments ainsi que d'une deuxième zone du boîtier (21) saillant dans la boîte de raccordement à encastrer (1) et prévu au logement partiel du premier module fonctionnel (2).

10. Unité d'installation électrique / électronique selon l'une quelconque des revendications 1 à 9, **caractérisée en ce que** le premier module fonctionnel (2) saillant dans la boîte de raccordement à encastrer (1) est entouré d'une partie (12) séparée du boîtier, définissable du deuxième module fonctionnel (5).

11. Unité d'installation électrique / électronique selon l'une quelconque des revendications 1 à 10, **caractérisée en ce que** le premier module fonctionnel (2) est entouré de manière intégrale par le deuxième module fonctionnel (5).
